# EUROPÄISCHE PATENTSCHRIFT

(11) **EP 3 485 457 B1**
(45) Veröffentlichungstag und Bekanntmachung des Hinweises auf die Patenterteilung: **27.01.2021**
(21) Anmeldenummer: 17751246.4
(22) Anmeldetag: 04.07.2017
(51) Int. Cl.: G06T 3/00, G06T 5/00

(54) **SYSTEM, INSBESONDERE MAGNETRESONANZSYSTEM, ZUM ERZEUGEN VON BILDERN**
SYSTEM, IN PARTICULAR MAGNETIC RESONANCE SYSTEM, FOR GERNERATING IMAGES
SYSTÈME, EN PARTICULIER SYSTÈME DE RÉSONANCE MAGNÉTIQUE, POUR GÉNÉRER DES IMAGES

(30) Priorität: 15.07.2016 DE 102016113138
(43) Veröffentlichungstag der Anmeldung: 22.05.2019
(73) Patentinhaber: Fraunhofer-Gesellschaft zur Förderung der angewandten Forschung e.V., 80686 München (DE)
(72) Erfinder: WENZEL, Markus, 22761 Hamburg (DE); EICKEL, Klaus, 28201 Bremen (DE)
(74) Vertreter: Eisenführ Speiser
(86) Internationale Anmeldenummer: PCT/EP2017/066657
(87) Internationale Veröffentlichungsnummer: WO 2018/011022

(56) Entgegenhaltungen:
- US-A1- 2010 266 185
- US-A1- 2011 181 285
- Fausto Milletari ET AL: "Hough-CNN: Deep Learning for Segmentation of Deep Brain Regions in MRI and Ultrasound", , 31. Januar 2016 (2016-01-31), Seiten 1-34, XP055334930, DOI: 10.1016/j.cviu.2017.04.002 Gefunden im Internet: URL:https://arxiv.org/pdf/1601.07014v3.pdf [gefunden am 2017-01-12]
- PEREIRA SERGIO ET AL: "Brain Tumor Segmentation Using Convolutional Neural Networks in MRI Images", IEEE TRANSACTIONS ON MEDICAL IMAGING, IEEE SERVICE CENTER, PISCATAWAY, NJ, US, Bd. 35, Nr. 5, Mai 2016 (2016-05), Seiten 1240-1251, XP011607955, ISSN: 0278-0062, DOI: 10.1109/TMI.2016.2538465 [gefunden am 2016-04-29]

## Beschreibung

Die Erfindung bezieht sich auf ein System, Verfahren und Computerprogramm zum Erzeugen von Bildern.

Die Patentanmeldung US 2011/0181285 A1 offenbart ein Magnetresonanzsystem, das zumindest zwei Akquisitionsequenzen durchführt, die jeweils eine Anregung mit einem Inversionspuls zum Anregen der Kernspins in einem Patienten und zwei nachfolgende Ausleseschritte umfassen. Die beiden Akquisitionsequenzen werden angewendet, um erste MR-Daten einer ersten Schicht des Patienten und zweite MR-Daten einer zweiten Schicht des Patienten zu erzeugen, wobei die MR-Daten jeweils eine T1-Relaxation in der jeweiligen Schicht repräsentieren. Die ersten und zweiten MR-Daten werden schließlich in einer Datei zusammengefasst.

Die Patentanmeldung US 2010/0266185 A1 offenbart ein Verfahren, bei dem Spektren für Voxel eines Bildes einer Prostata mittels Magnetresonanzspektroskopie bestimmt werden. Auf Basis der Spektren werden Eingangswerte für ein neuronales Netz bestimmt, das trainiert worden ist, den jeweiligen Voxel als einen Tumor-Voxel oder einen Nicht-Tumor-Voxel zu klassifizieren. Das derart trainierte neuronale Netz wird dann zusammen mit den Eingangswerten verwendet, um die Voxel des Bildes der Prostata zu klassifizieren.

Der Artikel "Hough-CNN: Deep Learning for Segmentation of Deep Brain Regions in MRI and Ultrasound" von F. Milletari et al., Cornell University (arXiv:1601.07014), Seiten 1 bis 34 (2016) beschreibt ein Verfahren zum Segmentieren eines Magnetresonanzbildes oder eines Ultraschallbildes mit Hilfe eines faltenden neuronalen Netzes (engl. "convolutional neural network", CNN) und einer Hough-Transformation. Der Artikel "Brain Tumor Segmentation Using Convolutional Neural Networks in MRI Images" von S. Pereira et al., IEEE Transactions of Medical Imaging, Bandnummer 35, Seiten 1240 bis 1251 (2016) offenbart ein Verfahren zum Segmentieren eines Gehirntumors in Magnetresonanzbildern unter Verwendung eines CNN, wobei in einem Vorverarbeitungsschritt eine Intensitätsnormalisierung durchgeführt wird.

Es ist bekannt, durch Magnetresonanztomographie (MRT) gemessene MR-Signale seriell nachzuverarbeiten, so dass letztlich ein ein-, zwei-, drei- oder höherdimensionales Bild im Graustufenkontrast erzeugt werden kann. Viele dieser seriellen Bilderzeugungschritte werden modular nacheinander abgearbeitet, wobei sich die Reihenfolge an den technischen und physikalischen Ursachen und Prinzipien orientiert. Meist werden zunächst Schritte zur Korrektur systematischer Messabweichungen angewandt, anschließend folgen aufnahmespezifische Algorithmen.

Diese Erzeugung von MR-Bildern erfordert einen relativ hohen Zeitaufwand, der durch den Gebrauch mehrerer Empfangsspulen reduziert werden kann. Grundsätzlich verzichtet man dabei auf eine vollständige räumliche Differenzierung der MR-Signale und nutzt bei der Erzeugung der letztlich räumlich differenzierten Bilder eine räumlich abhängige Empfangssensitivität der jeweiligen Empfangsspule, das heißt, das sogenannte Spulenprofil. Zuvor ist hierfür allerdings ein Trainingsprozess mit individuell aufgenommenen Referenzdaten (ACS-Daten, englisch: "autocalibration signal data") nötig, durch den die Spulenprofile bestimmt werden. Dieses Prinzip findet beispielsweise bei der sogenannten Parallelen Bildgebung (PI, englisch: "parallel imaging") oder der gleichzeitigen Mehrschichtaufnahme (SMS, englisch: "simultaneous multi-slice imaging) Anwendung. Problematisch ist hierbei vor allem der zusätzliche Messaufwand für die Aufnahme der Referenzdaten (ACS-Daten). Im Allgemeinen ist die Akquisition dieser zusätzlichen Daten mit einem nicht vernachlässigbaren Zeitaufwand verbunden.

Veränderungen etwaiger geometrischer Anordnungen zum Beispiel durch Bewegung stellen im Hinblick auf die Verwendbarkeit der Referenzdaten ein Problem dar, da bei bereits kleinen Störungen neue Referenzdaten benötigt werden würden, um diesen Störungen Rechnung zu tragen und Bilder guter Qualität zu erzeugen. Neben Aspekten der eigentlichen Referenzdatenaufnahme und der Systemstabilität ist bei stark beschleunigter Bilderzeugung die PI- oder SMS-Bilderzeugung selbst ein verbesserungsbedürftiger Arbeitsschritt im Gesamtprozess. Dies betrifft besonders die Geschwindigkeit, mit der die MR-Signale verarbeitet werden, da rechenintensive Operationen und der serielle Aufbau einzelner Bilderzeugungsmodule zu deutlichen Wartezeiten zwischen Datenaufnahme und erfolgter Bilderzeugung führen können.

Die Referenzdaten (ACS-Daten) werden vorher, während oder nach der eigentlichen MR-Messung zusätzlich aufgenommen. Mit diesen ACS-Daten wird eine "Zuordnung" der Spulengeometrie zur den jeweiligen Bildortpunkten bestimmt, welche anschließend eine sogenannte Entfaltungsmatrix bildet, mit der sich die niedrigabgetasteten Messdaten nahezu vollständig rekonstruieren lassen. Bei dem SMS-Prozess werden in N räumlich differenzierten zweidimensionalen Schichten durch gemeinsame Anregung MR-Signale erzeugt und aufgenommen, wobei N die Anzahl der jeweils gleichzeitig angeregten Schichten darstellt. Die MR-Signale werden zu MR-Bildern rekonstruiert, in denen die Informationen der *N* unterschiedlichen Schichten im Mittel zunächst gleichberechtigt wiedergegeben sind. Entsprechend des jeweiligen Spulenprofils unterscheiden sich die einzelnen mit Hilfe der jeweiligen Empfangsspulen erzeugten Schichtinformationen jedoch. Durch Messen und Verwenden der Referenzdaten lassen sich schließlich MR-Bilder erzeugen, in denen die Schichtinformationen räumlich differenziert dargestellt sind. Hierzu kann beispielsweise der sogenannte sliceGRAPPA-Algorithmus verwendet werden, der zum Beispiel in dem Artikel "Blipped-Controlled Aliasing in Parallel Imaging (blipped-CAIPI) for simultaneous multi-slice EPI with reduced g-factor penalty" von K. Setsompop et al., Magnetic Resonance in Medicine, 67(5), Seiten 1210 bis 1224 (2012) offenbart ist. Diese Methode benötigt jedoch einen relativ hohen Zeitaufwand und ist nicht generalisiert, sondern wird nur für eine konkrete Konfiguration verwendet.

Es ist eine Aufgabe der vorliegenden Erfindung, ein System, Verfahren und Computerprogramm zum Erzeugen von Bildern bereitzustellen, die eine Reduzierung des zum Erzeugen der Bilder benötigten Zeitaufwands ermöglichen.

Die Aufgabe wird durch ein System zum Erzeugen von Bildern gelöst, wobei das System aufweist:
- eine Eingangsbilderbereitstellungseinheit zum Bereitstellen von Eingangsbildern, in denen tatsächlich räumlich getrennte Strukturen zumindest in einer Raumrichtung räumlich überlagert dargestellt sind,
- eine Neuronales-Netz-Bereitstellungseinheit zum Bereitstellen eines neuronalen Netzes, das angepasst ist, auf Basis von Eingangsbildern, in denen tatsächlich räumlich getrennte Strukturen zumindest in einer Raumrichtung räumlich überlagert dargestellt sind, Ausgangsbilder zu erzeugen, in denen die tatsächlich räumlich getrennten Strukturen in der zumindest einen Raumrichtung räumlich getrennt dargestellt sind,
- eine Bildererzeugungseinheit zum Erzeugen von Bildern auf Basis der bereitgestellten Eingangsbilder und des bereitgestellten neuronalen Netzes.

Durch Verwenden des neuronalen Netzes ist es möglich, die Bilder auf Basis der bereitgestellten Eingangsbilder so zu erzeugen, dass die tatsächlich räumlich getrennten Strukturen in der zumindest einen Raumrichtung auch räumlich getrennt dargestellt sind, ohne dass hierfür beispielsweise unmittelbar vor der Erzeugung der Eingangsbilder Referenzmessungen durchgeführt werden müssen. Hierdurch kann die Zeit, die benötigt wird, um beispielsweise ein Bild eines Patienten zu erzeugen, reduziert werden. So kann beispielsweise in einem Krankenhaus die Zeit, während der sich ein Patient in dem System zum Erzeugen von Bildern befinden muss, vermindert werden.

Die Eingangsbilderbereitstellungseinheit kann beispielsweise eine Speichereinheit sein, in der die Eingangsbilder gespeichert sind und die die gespeicherten Eingangsbilder bereitstellen kann. Die Eingangsbilderbereitstellungseinheit kann aber auch eine Empfangseinheit sein, die angepasst ist, die Eingangsbilder von einer Eingangsbildererzeugungseinheit zu empfangen. Die Eingangsbilderbereitstellungseinheit kann auch selbst die Eingangsbildererzeugungseinheit sein.

Die Eingangsbilderbereitstellungseinheit kann angepasst sein, die tatsächlich räumlich getrennten Strukturen in einer Raumrichtung, in zwei Raumrichtungen oder in drei Raumrichtungen räumlich überlagert darzustellen. In einer Ausführungsform kann ein Eingangsbild eine Schicht darstellen, in der tatsächlich in unterschiedlichen Schichten befindliche Strukturen dargestellt sind, wobei in der dargestellten Schicht diese Strukturen zueinander verschoben sein können, so dass sie in einer Raumrichtung, die senkrecht zu dieser dargestellten Schicht angeordnet sind, überlagert dargestellt sind. Wenn in diesem Beispiel ein Koordinatensystem x- und y-Achsen innerhalb der Schicht und eine z-Achse senkrecht zu dieser Schicht aufweisen würde, so würden diese Strukturen an derselben z-Position und damit bezüglich der z-Raumrichtung oder z-Achse überlagert dargestellt werden.

Die Neuronales-Netz-Bereitstellungseinheit kann eine Speichereinheit sein, die angepasst ist, das neuronale Netz bereitzustellen. Die Neuronales-Netz-Bereitstellungseinheit kann auch eine Empfangseinheit sein, die ein neuronales Netz beispielsweise von einer Neuronales-Netz-Trainingseinheit empfängt. Die Neuronales-Netz-Bereitstellungseinheit kann auch selbst eine Neuronales-Netz-Trainingseinheit sein, die das trainierte neuronale Netz bereitstellt.

Die Eingangsbilder und die Ausgangsbilder sind bevorzugt MR-Bilder. Insbesondere sind die Eingangsbilder MR-Bilder, die durch Anregung mehrerer aufzunehmender Bereiche eines Objekts erzeugt worden sind, wobei in den Bereichen befindliche Strukturen zumindest in einer Raumrichtung räumlich überlagert dargestellt sind, und die Ausgangsbilder sind MR-Bilder, in denen die in den angeregten Bereichen befindlichen räumlich getrennten Strukturen in der zumindest einen Raumrichtung räumlich getrennt dargestellt sind. Das heißt bevorzugt, dass die Eingangsbilder MR-Bilder sind, die durch gemeinsame, insbesondere gleichzeitige, Anregung mehrerer aufzunehmender Bereiche eines Objekts erzeugt worden sind, wobei in den Bereichen befindliche Strukturen zumindest in einer Raumrichtung räumlich überlagert dargestellt sind, und die Ausgangsbilder sind MR-Bilder, in denen die in den angeregten Bereichen befindlichen räumlich getrennten Strukturen in der zumindest einen Raumrichtung räumlich getrennt dargestellt sind. Die Eingangsbilderbereitstellungseinheit kann demnach angepasst sein, entsprechende MR-Bilder als Eingangsbilder bereitzustellen, und die Neuronales-Netz-Bereitstellungseinheit kann zusammen mit der Bilderzeugungseinheit angepasst sein, auf Basis dieser bereitgestellten MR-Bilder entsprechende MR-Bilder als Ausgangsbilder zu erzeugen. Die Bereiche können zweidimensionale Schichten oder dreidimensionale Volumen sein.

Die Eingangsbilder sind bevorzugt MR-Bilder, die mittels mehrerer Empfangsspulen erzeugt worden sind. Insbesondere wird für jede Empfangsspule mindestens ein MR-Bild als Eingangsbild bereitgestellt, das durch Anregung mehrerer aufzunehmender Bereiche eines Objekts erzeugt worden ist, wobei in den Bereichen befindliche Strukturen zumindest in einer Raumrichtung räumlich überlagert dargestellt sind. Das heißt bevorzugt, dass für jede Empfangsspule mindestens ein MR-Bild als Eingangsbild bereitgestellt wird, das durch gemeinsame, insbesondere gleichzeitige, Anregung mehrerer aufzunehmender Bereiche eines Objekts erzeugt worden ist, wobei in den Bereichen befindliche Strukturen zumindest in einer Raumrichtung räumlich überlagert dargestellt sind. Zum Beispiel ist die Eingangsbilderbereitstellungseinheit angepasst, mehrere Sätze von Eingangsbildern bereitzustellen, wobei Eingangsbilder eines selben Satzes durch Anregung derselben Bereiche und unter Verwendung mehrerer Empfangsspulen erzeugt worden sind, wobei Eingangsbilder unterschiedlicher Sätze durch Anregung unterschiedlicher Bereiche erzeugt worden sind, wobei das neuronale Netz angepasst ist, für jeden Satz von Eingangsbildern einen Satz von Ausgangsbildern zu erzeugen, in denen die angeregten Bereiche räumlich getrennt dargestellt sind, wobei die Bilderzeugungseinheit angepasst ist, die Ausgangsbilder von unterschiedlichen Sätzen miteinander zu registrieren. Das heißt, dass beispielsweise für jede Empfangsspule und für jede Gruppe von gemeinsam, insbesondere gleichzeitig, angeregten Bereichen des Objektes jeweils ein MR-Bild als Eingangsbild erzeugt werden kann, in dem in unterschiedlichen Bereichen befindliche Strukturen überlagert dargestellt sind. Diese Eingangsbilder werden zusammen mit dem neuronalen Netz verwendet, um als Ausgangsbilder MR-Bilder zu erzeugen, die die in den unterschiedlichen Bereichen befindlichen Strukturen räumlich getrennt darstellen. Da sich zwischen der Erzeugung verschiedener Sätze von Eingangsbildern das Objekt, das bevorzugt ein Patient ist, bewegen könnte, werden die Ausgangsbilder von unterschiedlichen Sätzen miteinander registriert, wodurch Bewegungsartefakte vermieden werden können. Im eingangs beschriebenen Stand der Technik, der die Referenzdaten verwendet, würde die Bewegung des Objektes zu Bewegungsartefakten führen, die sich nicht durch eine einfache Registrierung beseitigen lassen. Es wird demnach nicht nur eine schnellere Erzeugung von Bildern ermöglicht, sondern auch eine signifikante Reduktion von Bewegungsartefakten.

Die Neuronales-Netz-Bereitstellungseinheit ist bevorzugt angepasst, ein Deep-Leaming-Netz als neuronales Netz bereitzustellen. Diese sogenannten "tiefen" neuronalen Netze können hierarchische Informationsstrukturen erlernen, so dass auch Kontext und räumliche Lagen in dem neuronalen Netz sehr gut repräsentiert werden können. Dies führt zu einer weiteren Verbesserung der Erzeugung der Bilder.

Das System kann zudem aufweisen a) eine Trainings-Eingangsbilderbereitstellungseinheit zum Bereitstellen von Trainings-Eingangsbildern, in denen tatsächlich räumlich getrennte Strukturen zumindest in einer Raumrichtung räumlich überlagert dargestellt sind, b) eine Trainings-Ausgangsbilderbereitstellungseinheit zum Bereitstellen von Trainings-Ausgangsbildem, in denen die tatsächlich räumlich getrennten Strukturen in der zumindest einen Raumrichtung räumlich getrennt dargestellt sind, und c) eine Neuronales-Netz-Trainingseinheit zum Trainieren des neuronalen Netzes derart, dass bei Eingabe der Trainings-Eingangsbilder in das neuronale Netz die Trainings-Ausgangsbilder ausgegeben werden. Die Trainings-Ausgangsbilderbereitstellungseinheit ist bevorzugt angepasst, als Trainings-Ausgangsbilder MR-Bilder einzelner, getrennt voneinander angeregter Bereiche eines Objekts bereitzustellen, so dass in unterschiedlichen Bereichen befindliche Strukturen in den Trainings-Ausgangsbildern in keiner Raumrichtung überlagert dargestellt sind, wobei die Trainings-Eingangsbilderbereitstellungseinheit angepasst ist, Trainings-Eingangsbilder bereitzustellen, in denen die in den unterschiedlichen Bereichen befindlichen Strukturen zumindest in einer Raumrichtung räumlich überlagert dargestellt sind. Dies ermöglicht beispielsweise, ein bereits bereitgestelltes neuronales Netz, das insbesondere schon trainiert worden ist, mit im Betrieb des Systems ermittelten MR-Bildern weiter zu trainieren. Dieses weitere Training kann zu einer weiteren Verbesserung des Systems zum Erzeugen von Bildern führen. Die Trainingseinheiten ermöglichen auch, ein untrainiertes neuronales Netz erstmals mit dem System, das für die Erzeugung der Bilder verwendet werden soll, zu trainieren. Die Trainingseinheiten können demnach verwendet werden, ein systemspezifisches neuronales Netz zu erzeugen.

Zumindest ein Teil der Trainings-Eingangsbilder kann durch MR-Messungen erzeugt werden. Alternativ oder zusätzlich kann zumindest ein Teil der Trainings-Eingangsbilder auf Basis der bereitgestellten Trainings-Ausgangsbilder synthetisch erzeugt werden. Die Trainings-Eingangsbilder können demnach vollständig durch MR-Messungen, teilsynthetisch oder auch vollsynthetisch erzeugt werden. Beispielsweise können Trainings-Eingangsbilder, die einzelne Schichten eines Objekts darstellen und damit in diesen Schichten befindliche Strukturen räumlich differenziert darstellen, kombiniert werden, um Trainings-Eingangsbilder synthetisch zu erzeugen, in denen diese tatsächlich in unterschiedlichen Schichten befindliche Strukturen räumlich undifferenziert dargestellt sind.

Die Trainings-Eingangsbilderbereitstellungseinheit kann angepasst sein, Trainings-Eingangsbilder mit Bildartefakten bereitzustellen, und die Trainings-Ausgangsbilderbereitstellungseinheit kann angepasst sein, Trainings-Ausgangsbilder bereitzustellen, die die Bildartefakte nicht aufweisen. Die Bildartefakte sind beispielsweise Bewegungsartefakte, also Artefakte, die durch Bewegung entstanden sind. Hierdurch kann das neuronale Netz auch trainiert werden, Bildartefakte zu reduzieren, wodurch das System zum Erzeugen von Bildern weiter verbessert werden kann.

Eine Trainingsvorrichtung zum Trainieren eines neuronalen Netzes umfasst:
- eine Trainings-Eingangsbilderbereitstellungseinheit zum Bereitstellen von Trainings-Eingangsbildern, in denen tatsächlich räumlich getrennte Strukturen zumindest in einer Raumrichtung räumlich überlagert dargestellt sind,
- eine Trainings-Ausgangsbilderbereitstellungseinheit zum Bereitstellen von Trainings-Ausgangsbildern, in denen die tatsächlich räumlich getrennten Strukturen in der zumindest einen Raumrichtung räumlich getrennt dargestellt sind,
- eine Neuronales-Netz-Bereitstellungseinheit zum Bereitstellen eines neuronalen Netzes,
- eine Neuronales-Netz-Trainingseinheit zum Trainieren des neuronalen Netzes derart, dass bei Eingabe der Trainings-Eingangsbilder in das neuronale Netz die Trainings-Ausgangsbilder ausgegeben werden.

Die Trainingsvorrichtung kann in ein System zum Erzeugen von Bildern integriert sein oder eine separate Vorrichtung sein. Die Trainings-Eingangsbilderbereitstellungseinheit kann eine Speichereinheit sein, in der die Trainings-Eingangsbilder abgespeichert sind, um ein Bereitstellen der Trainings-Eingangsbilder zu ermöglichen. Die Trainings-Eingangsbilderbereitstellungseinheit kann auch eine Empfangseinheit sein, um Trainings-Eingangsbilder beispielsweise von einer Trainings-Eingangsbildererzeugungseinheit zu empfangen. Die Trainings-Eingangsbilderbereitstellungseinheit kann auch eine Trainings-Eingangsbildererzeugungseinheit sein. Entsprechend kann die Trainings-Ausgangsbilderbereitstellungseinheit eine Speichereinheit, eine Empfangseinheit und/oder eine Trainings-Ausgangsbildererzeugungseinheit sein. Die Neuronales-Netz-Bereitstellungseinheit kann eine Speichereinheit, eine Empfangseinheit und/oder eine Neuronales-Netz-Erzeugungseinheit sein.

Zudem wird die oben genannte Aufgabe durch ein Verfahren zum Erzeugen von Bildern gelöst, wobei das Verfahren aufweist:
- Bereitstellen von Eingangsbildern, in denen tatsächlich räumlich getrennte Strukturen zumindest in einer Raumrichtung räumlich überlagert dargestellt sind,
- Bereitstellen eines neuronalen Netzes, das angepasst ist, auf Basis von Eingangsbildern, in denen tatsächlich räumlich getrennte Strukturen zumindest in einer Raumrichtung räumlich überlagert dargestellt sind, Ausgangsbilder zu erzeugen, in denen die tatsächlich räumlich getrennten Strukturen in der zumindest einen Raumrichtung räumlich getrennt dargestellt sind,
- Erzeugen von Bildern auf Basis der bereitgestellten Eingangsbilder und des bereitgestellten neuronalen Netzes.

Ein Trainingsverfahren zum Trainieren eines neuronalen Netzes umfasst:
- Bereitstellen von Trainings-Eingangsbildern, in denen tatsächlich räumlich getrennte Strukturen zumindest in einer Raumrichtung räumlich überlagert dargestellt sind,
- Bereitstellen von Trainings-Ausgangsbildern, in denen die tatsächlich räumlich getrennten Strukturen in der zumindest einen Raumrichtung räumlich getrennt dargestellt sind,
- Bereitstellen eines neuronalen Netzes,
- Trainieren des neuronalen Netzes derart, dass bei Eingabe der Trainings-Eingangsbilder in das neuronale Netz die Trainings-Ausgangsbilder ausgegeben werden.

Außerdem wird die oben genannte Aufgabe durch ein Computerprogramm zum Erzeugen von Bildern gelöst, wobei das Computerprogramm angepasst ist, das Verfahren zum Erzeugen von Bildern gemäß Anspruch 13 durchzuführen, wenn es auf einem System zum Erzeugen von Bildern gemäß Anspruch 1 ausgeführt wird.

Ein Computerprogramm zum Trainieren eines neuronalen Netzes ist angepasst, das Trainingsverfahren zum Trainieren eines neuronalen Netzes durchzuführen, wenn es auf der Trainingsvorrichtung zum Trainieren eines neuronalen Netzes ausgeführt wird.

Es sollte verstanden werden, dass das System zum Erzeugen von Bildern nach Anspruch 1, das Verfahren zum Erzeugen von Bildern nach Anspruch 13 und das Computerprogramm zum Erzeugen von Bildern nach Anspruch 14 ähnliche und/oder identische bevorzugte Ausführungsformen aufweisen, wie sie insbesondere in den abhängigen Ansprüchen definiert sind.

Im Folgenden werden Ausführungsformen der Erfindung unter Bezugnahme auf folgende Figuren beschrieben, wobei
- Fig. 1: schematisch und exemplarisch eine Ausführungsform eines Systems zum Erzeugen von Bildern zeigt,
- Fig. 2: schematisch und exemplarisch eine Ausführungsform einer Trainingsvorrichtung zum Trainieren eines neuronalen Netzes zeigt,
- Fig. 3: ein Flussdiagramm zeigt, das eine Ausführungsform eines Verfahrens zum Erzeugen von Bildern illustriert,
- Fig. 4: ein Flussdiagramm zeigt, das eine Ausführungsform eines Trainingsverfahrens zum Trainieren eines neuronalen Netzes illustriert,
- Fig. 5: schematisch und exemplarisch zwei Schichten eines Objekts illustriert,
- Fig. 6: schematisch und exemplarisch ein Eingangsbild zeigt,
- Fig. 7: schematisch und exemplarisch ein weiteres alternatives Eingangsbild zeigt, und
- Fig. 8: schematisch und exemplarisch zwei Ausgangsbilder zeigt.

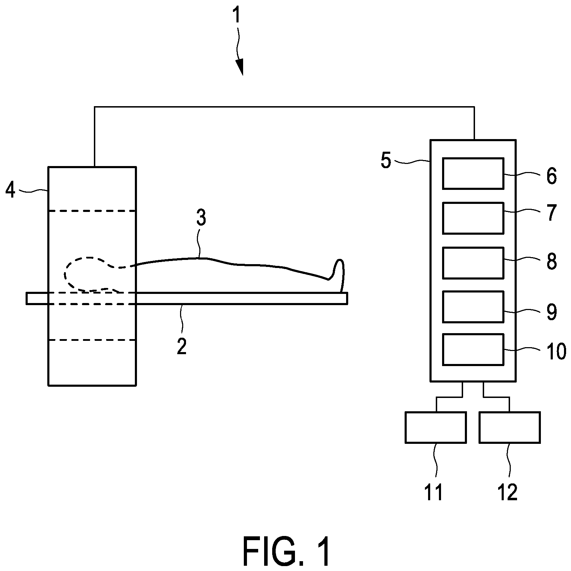

Eine Ausführungsform eines Systems zum Erzeugen von Bildern ist in der Fig. 1 schematisch und beispielhaft dargestellt. Das System 1 umfasst eine Akquisitionseinheit 4 zum Erzeugen von MR-Signalen, die von einer in einer Verarbeitungseinheit 5 befindlichen Rekonstruktionseinheit 6 zu MR-Bildern rekonstruiert werden. Die Akquisitionseinheit 4 weist in bekannter Weise einen Hauptmagneten zum Erzeugen eines Hauptmagnetfeldes, Gradientenspulen zur Ortscodierung, eine Anregungsspule und mehrere Empfangsspulen auf. Sie ist angepasst, mehrere Schichten eines auf einem Patiententisch 2 befindlichen Patienten 3 gleichzeitig anzuregen, so dass die jeweilige Empfangsspule ein MR-Signal erzeugt, das nicht zwischen in den unterschiedlichen Schichten befindlichen Strukturen differenziert. So werden beispielsweise zunächst zwei Schichten des Patienten gleichzeitig angeregt, so dass bei zum Beispiel zehn Empfangsspulen für diese spezifische Anregung zehn MR-Bilder rekonstruiert werden können, wobei jedes MR-Bild in den gleichzeitig angeregten Schichten befindliche Strukturen überlagert darstellt. Danach können weitere zwei Schichten gleichzeitig angeregt werden, um einen weiteren Satz von in diesem Beispiel zehn MR-Bildern zu erzeugen. Wenn in diesem Beispiel zehnmal jeweils zwei Schichten gleichzeitig angeregt worden sind, werden demnach zehn Sätze von MR-Bildern erzeugt, wobei jeder Satz wiederum zehn MR-Bilder umfasst, die in den jeweiligen unterschiedlichen Schichten befindliche Strukturen überlagert darstellen. Die zehn Sätze von MR-Bildern, die jeweils zehn MR-Bilder umfassen, werden im Folgenden als Eingangsbilder bezeichnet.

Das System 1 umfasst des Weiteren eine Neuronales-Netz-Bereitstellungseinheit 7 zum Bereitstellen eines neuronalen Netzes, das angepasst ist, auf Basis von Eingangsbildern, in denen tatsächlich räumlich getrennte Strukturen zumindest in einer Raumrichtung räumlich überlagert dargestellt sind, Ausgangsbilder zu erzeugen, in denen die tatsächlich räumlich getrennten Strukturen in der zumindest einen Raumrichtung räumlich getrennt dargestellt sind. Zudem umfasst das System 1 eine Bilderzeugungseinheit 8 zum Erzeugen von Bildern auf Basis der bereitgestellten Eingangsbilder und des bereitgestellten neuronalen Netzes. In dieser Ausführungsform sind die Ausgangsbilder des neuronalen Netzes und damit die von der Bilderzeugungseinheit 8 erzeugten Bilder MR-Bilder. Insbesondere wird für jeden der oben genannten zehn Sätze an Eingangsbildern ein Satz von Ausgangsbildern erzeugt, wobei jedes Ausgangsbild eine der in diesem Beispiel zwei Schichten zeigt, die bei der Erzeugung des jeweiligen Satzes von Eingangsbildern gleichzeitig angeregt worden sind, so dass die Ausgangsbilder die in unterschiedlichen Schichten befindlichen Strukturen räumlich getrennt darstellen. Die Ausgangsbilder unterschiedlicher Sätze werden miteinander registriert.

Die Neuronales-Netz-Bereitstellungseinheit 7 ist angepasst, ein Deep-Learning-Netz, das auch als tiefes Netz bezeichnet werden kann, als neuronales Netz bereitzustellen.

Da die Eingangsbilder mittels der Akquisitionseinheit 4 und der Rekonstruktionseinheit 6 erzeugt werden, bilden in dieser Ausführungsform diese Einheiten eine Eingangsbilderbereitstellungseinheit. Die Akquisitionseinheit 4 und die Rekonstruktionseinheit 6 können aber auch verwendet werden, um MR-Bilder einzelner, getrennt voneinander angeregter Schichten des Patienten 3 oder eines anderen Patienten oder eines anderen Objekts wie beispielsweise eines Phantoms zu erzeugen. Diese MR-Bilder, die jeweils einzelne Schichten zeigen, können als Trainings-Ausgangsbilder verwendet werden, um das bereitgestellte neuronale Netz, das bereits trainiert ist, weiter zu trainieren. Die Akquisitionseinheit 4 und die Rekonstruktionseinheit 6 können demnach auch so aufgefasst werden, dass sie eine Trainings-Ausgangsbilderbereitstellungseinheit bilden, wobei die Trainings-Ausgangsbilderbereitstellungseinheit angepasst ist, Trainings-Ausgangsbilder bereitzustellen, in denen tatsächlich räumlich getrennte Strukturen räumlich getrennt dargestellt sind.

Das System 1 weist des Weiteren eine Trainings-Eingangsbilderbereitstellungseinheit 9 zum Bereitstellen von Trainings-Eingangsbildern auf, in denen tatsächlich räumlich getrennte Strukturen zumindest in einer Raumrichtung räumlich überlagert dargestellt sind. In dieser Ausführungsform ist die Trainings-Eingangsbilderbereitstellungseinheit 9 angepasst, die Trainings-Eingangsbilder auf Basis der bereitgestellten Trainings-Ausgangsbilder synthetisch zu erzeugen. Beispielsweise können mehrere Trainings-Ausgangsbilder kombiniert, insbesondere linear kombiniert, werden, um ein Trainings-Eingangsbild zu erzeugen.

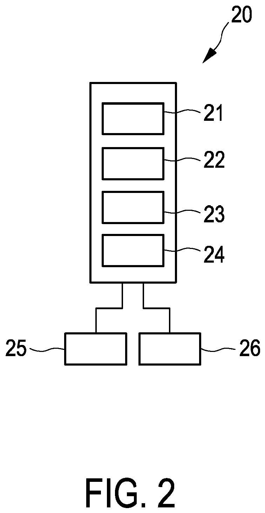

Das System 1 umfasst zudem eine Neuronales-Netz-Trainingseinheit 10 zum Trainieren des neuronalen Netzes derart, dass bei Eingabe der Trainings-Eingangsbilder in das neuronale Netz die Trainings-Ausgangsbilder ausgegeben werden. In diesem Ausführungsbeispiel ist das von der Neuronales-Netz-Bereitstellungseinheit 7 bereitgestellte neuronale Netz ein bereits trainiertes Netz, das von der Neuronales-Netz-Trainingseinheit 10 weiter trainiert werden kann. Es ist allerdings auch möglich, dass das System initial ein untrainiertes neuronales Netz aufweist, das mittels der Neuronales-Netz-Trainingseinheit 10 trainiert wird, wonach dieses trainierte neuronale Netz von der Neuronales-Netz-Bereitstellungseinheit 7 bereitgestellt werden kann. Zum Trainieren des neuronalen Netzes kann aber auch eine separate Trainingsvorrichtung 20 verwendet werden, die schematisch und beispielhaft in Fig. 2 gezeigt ist.

Die Trainingsvorrichtung 20 umfasst eine Trainings-Eingangsbilderbereitstellungseinheit 21 zum Bereitstellen von Trainings-Eingangsbildern, in denen tatsächlich räumlich getrennte Strukturen zumindest in einer Raumrichtung räumlich überlagert dargestellt sind, und eine Trainings-Ausgangsbilderbereitstellungseinheit 22 zum Bereitstellen von Trainings-Ausgangsbildern, in denen die tatsächlich räumlich getrennten Strukturen in der zumindest einen Raumrichtung räumlich getrennt dargestellt sind. Die Trainingsvorrichtung 20 umfasst des Weiteren eine Neuronales-Netz-Bereitstellungseinheit 23 zum Bereitstellen eines untrainierten neuronalen Netzes und eine Neuronales-Netz-Trainingseinheit 24 zum Trainieren des neuronalen Netzes derart, dass bei Eingabe der Trainings-Eingangsbilder in das neuronale Netz die Trainings-Ausgangsbilder ausgegeben werden. In dieser Ausführungsform ist die Trainings-Ausgangsbilderbereitstellungseinheit 22 eine Speichereinheit, in der mittels MR-Messungen erzeugte MR-Bilder als Trainings-Ausgangsbilder abgespeichert sind. Diese MR-Bilder stellen in diesem Ausführungsbeispiel jeweils eine Schicht eines Objektes dar. Die Trainings-Eingangsbilderbereitstellungseinheit 21 ist in diesem Ausführungsbeispiel angepasst, die Trainings-Eingangsbilder synthetisch durch Kombination entsprechender Trainings-Ausgangsbilder zu erzeugen.

Das neuronale Netz ist aus einer Vielzahl von Ebenen aufgebaut, wobei die Ebenen beispielsweise eine Vielzahl von sogenannten Neuronen aufweisen können. Die Tiefe eines neuronalen Netzes ist durch die Anzahl seiner Ebenen bestimmt. Das neuronale Netz umfasst eine Eingangsebene und eine Ausgangsebene, wobei die Ausgangsebene mit den Trainings-Ausgangsbildern und die Eingangsebene mit den Trainings-Eingangsbildern verknüpft ist. Bei der normalen Verwendung des neuronalen Netzes, das heißt, wenn das neuronale Netz nicht trainiert wird, ist die Eingangsebene mit den Eingangsbildern und die Ausgangsebene mit den Ausgangsbildern verknüpft.

Das tiefe neuronale Netz weist zwischen der Eingangsebene und der Ausgangsebene mindestens eine weitere Ebene auf, die als "versteckte" Ebene bezeichnet werden könnte. Bevorzugt weist das neuronale Netz mindestens 15 dieser versteckten Ebenen auf. Zudem ist das neuronale Netz bevorzugt so aufgebaut, dass sich die Anzahl der Neuronen pro versteckte Ebene ausgehend von der Eingangsebene zunächst verringert und die Anzahl danach wieder bis zur Ausgangsebene ansteigt. Zudem können die Eingangsebene und die Ausgangsebene dieselbe Anzahl an Neuronen aufweisen. In einer bevorzugten Ausführungsform verringert sich die Anzahl an Neuronen sukzessive ausgehend von der Eingangsebene bis zu einer vorbestimmten versteckten Ebene auf eine ebenfalls vorbestimmte Anzahl von Neuronen, beispielweise bis auf ein einzelnes Neuron, wonach sich die Anzahl ausgehend von der vorbestimmten versteckten Ebene bis zur Ausgangsebene wieder sukzessive bis zur Anzahl der Neuronen der Eingangsebene erhöht (sogenannte U-Netze).

Das Training des neuronalen Netzes kann stufenweise erfolgen, wobei die räumliche Auflösung der Trainingsbilder nach und nach erhöht wird. Zudem können zunächst zum Training im Wesentlichen fehlerfreie Trainingsbilder verwendet werden und später können Trainings-Eingangsbilder mit hinzugefügten Effekten wie beispielsweise Artefakten und Trainings-Ausgangsbilder ohne diese Effekte verwendet werden, insbesondere um auch eine Reduktion dieser Effekte zu trainieren. Diese Effekte sind beispielsweise räumliche Verschiebungen, Verzerrungen, Kontrastvariationen entsprechend verschiedener Systemkonfigurationen et cetera. Diese Effekte können rechnerisch zu den Trainings-Eingangsbilder hinzugefügt werden. In einer Ausführungsform wird in einer ersten Phase mit steigender räumlicher Auflösung, aber ohne hinzugefügte Effekte, und in einer zweiten Phase mit konstanter räumlicher Auflösung und hinzugefügten Effekten trainiert.

Die einzelnen Neuronen des neuronalen Netzes sind über gewichtete Funktionen verbunden. Beim Trainieren des neuronalen Netzes werden die Gewichte der Funktionen zwischen den Neuronen beispielsweise durch Rückpropagation für das zu trainierende Problem optimiert. Für weitere Details bezüglich des Trainierens eines neuronalen Netzes wird auf den Artikel "Deep Learning" von LeCun et al., Nature, Band 521, Seiten 436 bis 444 (2015) verwiesen.

Das System 1 zum Erzeugen von Bildern umfasst eine Eingabeeinheit 11 wie beispielsweise eine Tastatur, eine Computermaus, einen Tabletcomputer, et cetera. Zudem umfasst das System 1 zum Erzeugen von Bildern eine Ausgabeeinheit 12 wie beispielsweise ein Display. Entsprechende Eingabe- und Ausgabeeinheiten 25, 26 umfasst auch die Trainingsvorrichtung 20.

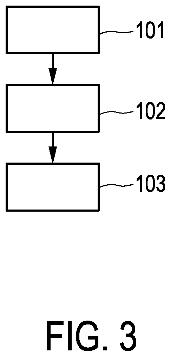

Im Folgenden wird beispielhaft eine Ausführungsform eines Verfahrens zum Erzeugen von Bildern unter Bezugnahme auf ein Flussdiagramm erläutert, das in der Fig. 3 dargestellt ist.

In Schritt 101 werden Eingangsbilder, in denen tatsächlich räumlich getrennte Strukturen zumindest in einer Raumrichtung räumlich überlagert dargestellt sind, bereitgestellt. In Schritt 102 wird ein neuronales Netz bereitgestellt, das angepasst ist, auf Basis von Eingangsbildern, in denen tatsächlich räumlich getrennte Strukturen zumindest in einer Raumrichtung räumlich überlagert dargestellt sind, Ausgangsbilder zu erzeugen, in denen die tatsächlich räumlich getrennten Strukturen in der zumindest einen Raumrichtung räumlich getrennt dargestellt sind. In Schritt 103 werden Bilder auf Basis der in Schritt 101 bereitgestellten Eingangsbilder und des in dem Schritt 102 bereitgestellten neuronalen Netzes erzeugt.

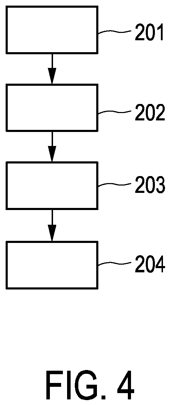

Im Folgenden wird beispielhaft eine Ausführungsform eines Trainingsverfahrens zum Trainieren eines neuronalen Netzes unter Bezugnahme auf ein Flussdiagramm beschrieben, das in der Fig. 4 dargestellt ist.

In Schritt 201 werden Trainings-Eingangsbilder bereitgestellt, in denen tatsächlich räumlich getrennte Strukturen zumindest in einer Raumrichtung räumlich überlagert dargestellt sind. In Schritt 202 werden Trainings-Ausgangsbilder bereitgestellt, in denen die tatsächlich räumlich getrennten Strukturen in der zumindest einen Raumrichtung räumlich getrennt dargestellt sind. In Schritt 203 wird ein neuronales Netz bereitgestellt, und in Schritt 204 wird das in dem Schritt 203 bereitgestellte neuronale Netz so trainiert, dass bei Eingabe der in dem Schritt 201 bereitgestellten Trainings-Eingangsbilder in das neuronale Netz die in dem Schritt 202 bereitgestellten Trainings-Ausgangsbilder ausgegeben werden.

Das neuronale Deep-Learning-Netz kann in einer Trainingsphase jede beliebige lineare oder nichtlineare Funktion approximieren. Während der Trainingsphase findet das neuronale Deep-Learning-Netz auf Basis der Trainings-Eingangsbilder und Trainings-Ausgangsbilder ein Modell, das bei Eingabe der Trainings-Eingangsbilder zu den Trainings-Ausgangsbildern führt. Nach diesem Training kann das neuronale Deep-Learning-Netz selbstständig Ausgangsbilder auf Basis von Eingangsbildern erzeugen. Das trainierte neuronale Deep-Learning-Netz ermöglicht beispielsweise eine sogenannte Separation oder Entfaltung von Bilddaten, die bei einer SMS-Messung aufgenommen wurden. Das heißt, es ermöglicht die Erzeugung von separierten beziehungsweise entfalteten Ausgangsbildem auf Basis von Eingangsbildern, die bei einer SMS-Messung aufgenommen wurden. Die Ausgangsbilder können erzeugt werden, ohne dass beispielsweise Referenzdaten gemessen und berücksichtigt werden müssen, wie es im eingangs beschriebenen Stand der Technik erforderlich ist. Da in den oben unter Bezugnahme auf Fig. 1 beschriebenen Ausführungsformen das System während des Einsatzes lernfähig ist, kann die Qualität der erzeugten Bilder weiter gesteigert und/oder die zur Bilderzeugung benötigte Zeit weiter reduziert werden. Im Speziellen kann die Korrektur systemspezifischer Imperfektionen wie beispielsweise eine B₀-Inhomogenität, B₁-Inhomogenität, et cetera erlernt werden, so dass das neuronale Netz auch eine entsprechende automatische Korrektur durchführen kann. Weitere Bilderzeugungsschritte können durch entsprechendes Training des neuronalen Netzes erfasst und damit durch dieses neuronale Netz ersetzt werden.

Die Trainings-Eingangsbilder und Trainings-Ausgangsbilder können beispielsweise teilsynthetisch und somit theoretisch in beliebiger Anzahl bereitgestellt werden. Die Bilddaten einiger tatsächlich durchgeführter MR-Messungen an einem System mit einer bestimmten Systemkonfiguration, das heißt insbesondere mit bestimmten Spulenprofilen, können hierbei als eine Art "Goldstandard" dienen. Durch anschließende Simulation können unterschiedliche Objektgeometrien und Aufnahmeparameter abgebildet und in den Trainingsprozess eingeführt werden.

Zum Beispiel können mittels der eingangs erwähnten SMS-Technik erste Trainings-Eingangsbilder erzeugt werden, wobei mehrere Schichten gleichzeitig angeregt werden. Erste Trainings-Ausgangsbilder können erzeugt werden, indem jede Schicht einzeln angeregt wird. Diese ersten Trainings-Eingangs- und Ausgangsbilder sind bevorzugt räumlich hochaufgelöst und können als "Goldstandard" dienen, wobei sie beispielsweise eine tatsächliche Person oder ein medizinisches Phantom zeigen können.

Diese ersten Trainings-Eingangs- und Ausgangsbilder können benutzt werden, um ohne Verwendung eines neuronalen Netzes eine Systemfunktion oder auch Systemantwort zu bestimmen, die indikativ ist für die Charakteristika des Systems und der Systemkonfiguration, die zur Erzeugung dieser Bilder benutzt worden ist. Diese Systemfunktion ist beispielsweise indikativ für die Spulenprofile, Inhomogenitäten des Hauptmagnetfelds et cetera und kann verwendet werden, weitere, synthetische Trainings-Eingangsbilder auf Basis vorgegebener weiterer Trainings-Ausgangsbilder zu berechnen. Diese weiteren Trainings-Ausgangsbilder können beliebige Bilddatensätze sein, die die unterschiedlichen Schichten zeigen. Es können MR-Bilddatensätzen aber auch Bilddatensätze anderer Modalitäten wie beispielsweise Computertomographie-Bilddatensätze sein.

Als Trainings-Ausgangsbilder können die oben genannten ersten Trainings-Ausgangsbilder oder auch andere gemessene MR-Bilder verwendet werden. Synthetische Trainings-Eingangsbilder können durch Kombinieren der Trainings-Ausgangsbilder erzeugt werden. Beispielsweise können die Trainings-Ausgangsbilder linear kombiniert, insbesondere einfach addiert, werden. Die Kombination kann auch eine komplexwertige Addition von Trainings-Eingangsbildern sein, wobei in diesem Fall die Amplituden- und die Phasenbilder berücksichtigt werden.

Die Trainings-Eingangs- und Ausgangsbilder können Amplitudenbilder und/oder Phasenbilder und/oder Kombinationen von Amplituden- und Phasenbildern sein.

Die oben beschriebenen Ausführungsformen können verwendet werden, um MR-Bilder mit relativ geringem Zeitaufwand zu erzeugen, ohne eine zusätzliche, separate Aufnahme von Referenzdaten. Diese relativ geringe Zeit zum Erzeugen der Bilder kann dazu führen, dass messtechnische Unsicherheiten, beispielsweise durch Objektbewegungen, insbesondere durch Patientenbewegungen, die bewusste Patientenbewegungen und unbewusste Patientenbewegungen wie die Atembewegung umfassen, reduziert werden. Hervorzuheben ist, dass nach Durchführung des Trainings das neuronale Netz unter dem Gesichtspunkt des rechentechnischen Aufwands sehr kompakt und schnell ist, wobei mehrere Bilderzeugungsschritte in einem neuronalen Netz vereint beziehungsweise kombiniert und somit schneller abgearbeitet werden können. Zudem besteht bei dem trainierten neuronalen Netz im Vergleich zum eingangs genannten Stand der Technik eine größere Konfigurationsfreiheit für die Akquise der MR-Signale und damit der Erzeugung der Eingangsbilder, da das trainierte neuronale Netz nicht nur zur Erzeugung von Bildern mittels einer definierten Systemkonfiguration bei festen Akquiseparametern geeignet ist, sondern auch Szenarien verarbeiten kann, die nicht in identischer Weise trainiert worden sind. Das neuronale Netz kann demnach trainingsszenarioähnliche Aufgaben bewältigen.

Obwohl in den oben aufgeführten Ausführungsformen die Eingangs- und Ausgangsbilder MR-Bilder sind, können das System zum Erzeugen von Bildern und die Trainingsvorrichtung auch angepasst sein, Bilder anderer Modalitäten zu erzeugen und neuronale Netze für andere Modalitäten zu trainieren. Diese anderen Modalitäten können beispielsweise sein: Positronen-Emissions-Tomographie (PET), Einzelphotonen-Emissions-Computertomographie (SPECT) oder Computertomographie (CT).

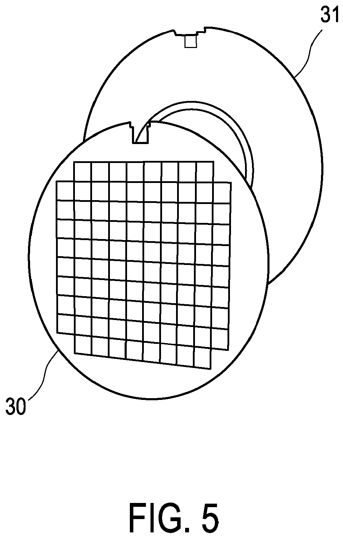

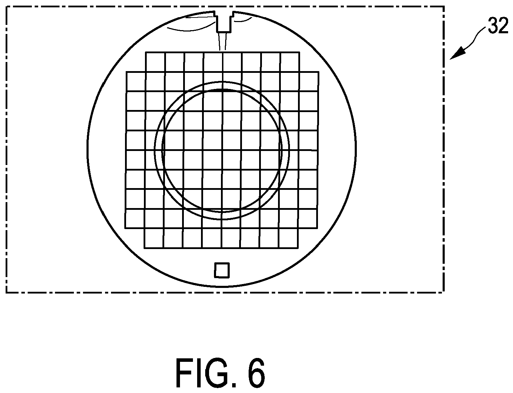

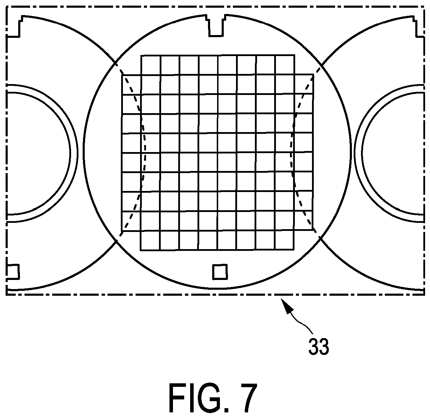

Fig. 5 zeigt beispielhaft zwei gleichzeitig angeregte Schichten 30, 31 eines Objekts, wobei sich in einer ersten Schicht 30 eine Gitterstruktur befindet und in einer zweiten Schicht 31 eine kreisförmige Struktur. Die MR-Signale dieser gleichzeitig angeregten Schichten 30, 31 werden von einer Empfangsspule empfangen, wonach diese MR-Signale verwendet werden, um ein Eingangsbild 32 zu erzeugen, das beispielhaft in der Fig. 6 gezeigt ist. Wie in der Fig. 6 zu sehen ist, sind die tatsächlich in den unterschiedlichen Schichten 30, 31 befindlichen getrennten Strukturen in dem Eingangsbild 32 überlagert. Fig. 7 zeigt eine andere Art der Überlagerung, in der die Schichten in der Bildebene des Eingangsbildes 33 zueinander verschoben worden sind, wobei die in den unterschiedlichen Schichten befindlichen Strukturen senkrecht zur Bildbeziehungsweise Blattebene immer noch überlagert sind.

Um das Eingangsbild 33 zu erzeugen, kann die Phasenkodierung der gemeinsam angeregten Bereiche so moduliert werden, dass die Schichten in der Bildebene des Eingangsbildes 33 zueinander verschoben sind. Diese Phasenmodulation kann beispielsweise durch die Hochfrequenzanregung oder mittels Magnetfeldveränderungen durch Gradientenspulen bewirkt werden. Zur Erzeugung des Eingangsbildes 33 wurde die Phasenmodulation so durchgeführt, dass die Schicht 31 um die Hälfte des Bildbereichs entlang der Phasenkodierrichtung verschoben ist. Die Schicht 30 erfährt keine Phasenmodulation und befindet sich daher weiterhin in der Mitte des Bildbereichs. Für weitere Details dieser Phasenmodulation wird auf den Artikel "Controlled Aliasing in Parallel Imaging Results in Higher Acceleration (CAIPIRINHA) for Multi-Slice Imaging" von Breuer et al., Magnetic Resonance in Medicine, Band 53, Seiten 684 bis 691 (2005) verwiesen.

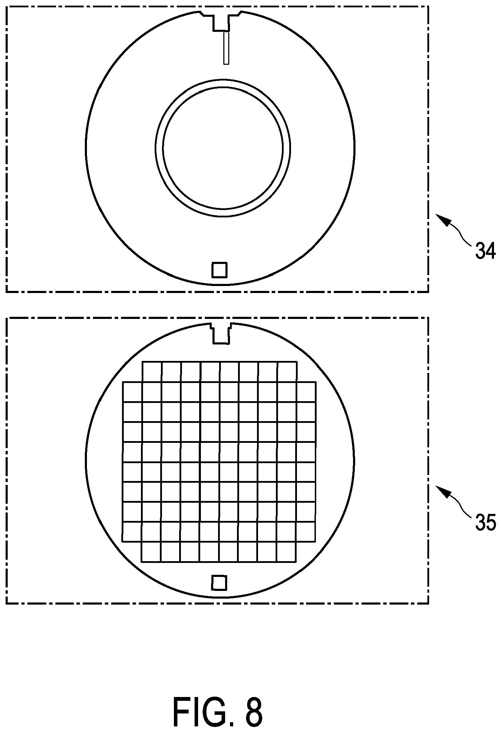

Die Eingangsbilder 32 oder die Eingangsbilder 33 werden für die verschiedenen Kombinationen von Empfangsspulen und gleichzeitig angeregten Schichten erzeugt, wonach auf Basis dieser Eingangsbilder mit Hilfe des neuronalen Netzes Ausgangsbilder erzeugt werden. Entsprechende Ausgangsbilder 34, 35 sind beispielhaft in der Fig. 8 gezeigt. Wie in der Fig. 8 zu sehen ist, zeigt das Ausgangsbild 34 lediglich die kreisförmige Struktur und das Ausgangsbild 35 lediglich die Gitterstruktur, so dass in den Ausgangsbildern 34, 35 die in den unterschiedlichen Schichten befindlichen Strukturen auch tatsächlich getrennt voneinander dargestellt sind.

Obwohl in den oben beschriebenen Ausführungsformen bestimmte neuronale Netze beschrieben worden sind, können zum Erzeugen der Bilder auch andere neuronale Netze, insbesondere andere tiefe neuronale Netze, verwendet werden. So können beispielsweise neuronale Netze verwendet werden, die nicht-lineare Pooling-Schichten (engl. "pooling layers") aufweisen.

In den Ansprüchen schließen die Wörter "aufweisen" und "umfassen" nicht andere Elemente oder Schritte aus und der unbestimmte Artikel "ein" schließt eine Mehrzahl nicht aus.

Ein einzelnes System, eine einzelne Einheit oder eine einzelne Vorrichtung kann die Funktionen mehrerer Elemente durchführen, die in den Ansprüchen aufgeführt sind. Die Tatsache, dass einzelne Funktionen und Elemente in unterschiedlichen abhängigen Ansprüchen aufgeführt sind, bedeutet nicht, dass nicht auch eine Kombination dieser Funktionen oder Elemente vorteilhaft verwendet werden könnte.

Vorgänge wie das Bereitstellen von Eingangsbildern, das Bereitstellen eines neuronalen Netzes, das Erzeugen von Bildern auf Basis der Eingangsbilder und des neuronalen Netzes, das Registrieren von Ausgangsbildern, das Bereitstellen von Trainings-Eingangsbildern, das Bereitstellen von Trainings-Ausgangsbildern, das Trainieren des neuronalen Netzes, et cetera, die von einer oder mehreren Einheiten oder Vorrichtungen durchgeführt werden, können auch von einer anderen Anzahl an Einheiten oder Vorrichtungen durchgeführt werden. Beispielsweise können das Bereitstellen des neuronalen Netzes, das Erzeugen von Bildern auf Basis der Eingangsbilder und des neuronalen Netzes und weitere Vorgänge von einer einzelnen Einheit oder von mehreren Einheiten durchgeführt werden. Diese Vorgänge und/oder die Steuerung des Systems zum Erzeugen von Bildern gemäß dem Verfahren zum Erzeugen von Bildern und/oder die Steuerung der Trainingsvorrichtung gemäß dem Trainingsverfahren können als Programmcode eines Computerprogramms und/oder als entsprechende Hardware implementiert sein.

Ein Computerprogramm kann auf einem geeigneten Medium gespeichert und/oder verteilt werden, wie beispielsweise einem optischen Speichermedium oder einem Festkörperspeichermedium, das zusammen mit oder als Teil anderer Hardware vertrieben wird. Das Computerprogramm kann aber auch in anderen Formen vertrieben werden, beispielsweise über das Internet oder andere Telekommunikationssysteme.

Die Bezugszeichen in den Ansprüchen sind nicht derart zu verstehen, dass der Gegenstand und der Schutzbereich der Ansprüche durch diese Bezugszeichen eingeschränkt sind.

## Patentansprüche

1. System zum Erzeugen von Bildern, wobei das System (1) aufweist:
- eine Eingangsbilderbereitstellungseinheit (4, 6) zum Bereitstellen von Eingangsbildern, in denen tatsächlich räumlich getrennte Strukturen zumindest in einer Raumrichtung räumlich überlagert dargestellt sind, **gekennzeichnet durch**:
- eine Neuronales-Netz-Bereitstellungseinheit (7) zum Bereitstellen eines neuronalen Netzes, das angepasst ist, auf Basis von Eingangsbildern, in denen tatsächlich räumlich getrennte Strukturen zumindest in einer Raumrichtung räumlich überlagert dargestellt sind, Ausgangsbilder zu erzeugen, in denen die tatsächlich räumlich getrennten Strukturen in der zumindest einen Raumrichtung räumlich getrennt dargestellt sind,
- eine Bildererzeugungseinheit (8) zum Erzeugen von Bildern auf Basis der bereitgestellten Eingangsbilder und des bereitgestellten neuronalen Netzes.

2. System nach Anspruch 1, **dadurch gekennzeichnet, dass** die Eingangsbilder und die Ausgangsbilder Magnetresonanz-Bilder (MR-Bilder) sind.

3. System nach Anspruch 2, **dadurch gekennzeichnet, dass** die Eingangsbilder MR-Bilder sind, die durch Anregung mehrerer aufzunehmender Bereiche eines Objekts erzeugt worden sind, wobei in den Bereichen befindliche Strukturen zumindest in einer Raumrichtung räumlich überlagert dargestellt sind, und die Ausgangsbilder MR-Bilder sind, in denen die in den angeregten Bereichen befindlichen räumlich getrennten Strukturen in der zumindest einen Raumrichtung räumlich getrennt dargestellt sind.

4. System nach einem der Ansprüche 2 und 3, **dadurch gekennzeichnet, dass** die Eingangsbilder MR-Bilder sind, die mittels mehrerer Empfangsspulen erzeugt worden sind.

5. System nach Anspruch 4, **dadurch gekennzeichnet, dass** für jede Empfangsspule mindestens ein MR-Bild als Eingangsbild bereitgestellt wird, das durch Anregung mehrerer aufzunehmender Bereiche eines Objekts erzeugt worden ist, wobei in den Bereichen befindliche Strukturen zumindest in einer Raumrichtung räumlich überlagert dargestellt sind.

6. System nach Anspruch 5, **dadurch gekennzeichnet, dass** die Eingangsbilderbereitstellungseinheit (4, 6) angepasst ist, mehrere Sätze von Eingangsbildern bereitzustellen, wobei Eingangsbilder eines selben Satzes durch Anregung derselben Bereiche und unter Verwendung mehrerer Empfangsspulen erzeugt worden sind, wobei Eingangsbilder unterschiedlicher Sätze durch Anregung unterschiedlicher Bereiche erzeugt worden sind, wobei das neuronale Netz angepasst ist, für jeden Satz von Eingangsbildern einen Satz von Ausgangsbildern zu erzeugen, in denen die angeregten Bereiche räumlich getrennt dargestellt sind, wobei die Bilderzeugungseinheit angepasst ist, die Ausgangsbilder von unterschiedlichen Sätzen miteinander zu registrieren.

7. System nach einem der vorhergehenden Ansprüche, **dadurch gekennzeichnet, dass** die Neuronales-Netz-Bereitstellungseinheit (7) angepasst ist, ein Deep-Learning-Netz als neuronales Netz bereitzustellen.

8. System nach einem der vorhergehenden Ansprüche, **dadurch gekennzeichnet, dass** das System (1) zudem aufweist:
- eine Trainings-Eingangsbilderbereitstellungseinheit (9) zum Bereitstellen von Trainings-Eingangsbildern, in denen tatsächlich räumlich getrennte Strukturen zumindest in einer Raumrichtung räumlich überlagert dargestellt sind,
- eine Trainings-Ausgangsbilderbereitstellungseinheit (4, 6) zum Bereitstellen von Trainings-Ausgangsbildern, in denen die tatsächlich räumlich getrennten Strukturen in der zumindest einen Raumrichtung räumlich getrennt dargestellt sind, und
- eine Neuronales-Netz-Trainingseinheit (10) zum Trainieren des neuronalen Netzes derart, dass bei Eingabe der Trainings-Eingangsbilder in das neuronale Netz die Trainings-Ausgangsbilder ausgegeben werden.

9. System nach Anspruch 8, **dadurch gekennzeichnet, dass** die Trainings-Ausgangsbilderbereitstellungseinheit (4, 6) angepasst ist, als Trainings-Ausgangsbilder MR-Bilder einzelner, getrennt voneinander angeregter Bereiche eines Objekts bereitzustellen, so dass in unterschiedlichen Bereichen befindliche Strukturen in den Trainings-Ausgangsbildern in keiner Raumrichtung überlagert dargestellt sind, wobei die Trainings-Eingangsbilderbereitstellungseinheit (9) angepasst ist, Trainings-Eingangsbilder bereitzustellen, in denen die in den unterschiedlichen Bereichen befindlichen Strukturen zumindest in einer Raumrichtung räumlich überlagert dargestellt sind.

10. System nach Anspruch 9, **dadurch gekennzeichnet, dass** zumindest ein Teil der Trainings-Eingangsbilder durch MR-Messungen erzeugt worden ist.

11. System nach einem der Ansprüche 9 und 10, **dadurch gekennzeichnet, dass** zumindest ein Teil der Trainings-Eingangsbilder auf Basis der bereitgestellten Trainings-Ausgangsbilder synthetisch erzeugt worden ist.

12. System nach einem der Ansprüche 8 bis 11, **dadurch gekennzeichnet, dass** die Trainings-Eingangsbilderbereitstellungseinheit (9) angepasst ist, Trainings-Eingangsbilder mit Bildartefakten bereitzustellen, und die Trainings-Ausgangsbilderbereitstellungseinheit (4, 6) angepasst ist, Trainings-Ausgangsbilder bereitzustellen, die die Bildartefakte nicht aufweisen.

13. Verfahren zum Erzeugen von Bildern, wobei das Verfahren aufweist:
- Bereitstellen von Eingangsbildern, in denen tatsächlich räumlich getrennte Strukturen zumindest in einer Raumrichtung räumlich überlagert dargestellt sind, **gekennzeichnet durch**:
- Bereitstellen eines neuronalen Netzes, das angepasst ist, auf Basis von Eingangsbildern, in denen tatsächlich räumlich getrennte Strukturen zumindest in einer Raumrichtung räumlich überlagert dargestellt sind, Ausgangsbilder zu erzeugen, in denen die tatsächlich räumlich getrennten Strukturen in der zumindest einen Raumrichtung räumlich getrennt dargestellt sind,
- Erzeugen von Bildern auf Basis der bereitgestellten Eingangsbilder und des bereitgestellten neuronalen Netzes.

14. Computerprogramm zum Erzeugen von Bildern, wobei das Computerprogramm angepasst ist, das Verfahren zum Erzeugen von Bildern gemäß Anspruch 13 durchzuführen, wenn es auf einem System (1) zum Erzeugen von Bildern gemäß Anspruch 1 ausgeführt wird.

## Claims

1. A system for producing images, wherein the system (1) comprises:
- an input image providing unit (4, 6) for providing input images in which structures that are in fact spatially separated are represented in a spatially superimposed manner in at least one spatial direction, **characterized in that**
- a neural network providing unit (7) for providing a neural network which is adapted to produce, on the basis of input images in which structures that are in fact spatially separated are represented in a spatially superimposed manner in at least one spatial direction, output images in which the structures that are in fact spatially separated are represented in a spatially separated manner in the at least one spatial direction,
- an image producing unit (8) for producing images on the basis of the provided input images and the provided neural network.

2. The system according to claim 1, **characterized in that** the input images and the output images are magnetic resonance images (MR images).

3. The system according to claim 2, **characterized in that** the input images are MR images produced by exciting several object regions to be imaged, wherein structures located in the regions are represented in a spatially superimposed manner in at least one spatial direction, and the output images are MR images in which the spatially separated structures located in the excited regions are represented in a spatially separated manner in the at least one spatial direction.

4. The system according to any one of claims 2 and 3, **characterized in that** the input images are MR images which have been produced by means of several receiver coils.

5. The system according to claim 4, **characterized in that** for each receiver coil at least one MR image, which has been produced by exciting several object regions to be imaged, is provided as input image, wherein structures located in the regions are represented in a spatially superimposed manner in at least one spatial direction.

6. The system according to claim 5, **characterized in that** the input image providing unit (4, 6) is adapted to provide several sets of input images, wherein input images from the same set have been produced by exciting the same regions and by using several receiver coils, wherein input images from different sets have been produced by exciting different regions, wherein the neural network is adapted to produce, for each set of input images, a set of output images in which the excited regions are represented in a spatially separated manner, wherein the image producing unit is adapted to register the output images from different sets with each other.

7. The system according to any one of the preceding claims, **characterized in that** the neural network providing unit (7) is adapted to provide a deep learning network as the neural network.

8. The system according to any one of the preceding claims, **characterized in that** the system (1) further comprises:
- a training input image providing unit (9) for providing training input images in which structures that are in fact spatially separated are represented in a spatially superimposed manner in at least one spatial direction,
- a training output image providing unit (4, 6) for providing training output images in which the structures that are in fact spatially separated are represented in a spatially separated manner in the at least one spatial direction, and
- a neural network training unit (10) for training the neural network in such a way that, upon input of the training input images into the neural network, the training output images are output.

9. The system according to claim 8, **characterized in that** the training output image providing unit (4, 6) is adapted to provide MR images of individual, separately excited regions of an object as training output images such that structures located in different regions are not shown superimposed in any spatial direction in the training output images, wherein the training input image providing unit (9) is adapted to provide training input images in which the structures located in the different regions are represented in a spatially superimposed manner in at least one spatial direction.

10. The system according to claim 9, **characterized in that** at least a part of the training input images has been produced by MR measurements.

11. The system according to any one of claims 9 and 10, **characterized in that** at least a part of the training input images has been synthetically produced on the basis of the provided training output images.

12. The system according to any one of claims 8 to 11, **characterized in that** the training input image providing unit (9) is adapted to provide training input images containing image artifacts, and the training output image providing unit (4, 6) is adapted to provide training output images which do not contain the image artifacts.

13. A method for producing images, wherein the method comprises the steps of:
- providing input images in which structures that are in fact spatially separated are represented in a spatially superimposed manner in at least one spatial direction, **characterized by**:
- providing a neural network which is adapted to produce, on the basis of input images in which structures that are in fact spatially separated are represented in a spatially superimposed manner in at least one spatial direction, output images in which the structures that are in fact spatially separated are represented in a spatially separated manner in the at least one spatial direction,
- producing images on the basis of the provided input images and the provided neural network.

14. A computer program for producing images, wherein the computer program is adapted to carry out the method for producing images according to claim 13 when it is executed on a system (1) for producing images according to claim 1.

## Revendications

1. Système de production d'images, dans lequel le système (1) présente :
- une unité de fourniture d'images d'entrée (4, 6) pour fournir des images d'entrée, sur lesquelles des structures séparées dans les faits spatialement sont représentées de manière superposée spatialement au moins dans une direction spatiale, **caractérisé par** :
- une unité de fourniture de réseau neuronal (7) pour fournir un réseau neuronal qui est adapté pour produire sur la base d'images d'entrée, sur lesquelles des structures séparées dans les faits spatialement sont représentées de manière superposée spatialement au moins dans une direction spatiale, des images de sortie, sur lesquelles les structures séparées dans les faits spatialement sont représentées de manière séparée spatialement dans l'au moins une direction spatiale,
- une unité de production d'images (8) pour produire des images sur la base des images d'entrée fournies et du réseau neuronal fourni.

2. Système selon la revendication 1, **caractérisé en ce que** les images d'entrée et les images de sortie sont des images à résonance magnétique (images de RM).

3. Système selon la revendication 2, **caractérisé en ce que** les images d'entrée sont des images de RM, qui ont été produites par excitation de plusieurs zones à enregistrer d'un objet, dans lequel des structures se trouvant dans les zones sont représentées de manière superposée spatialement au moins dans une direction spatiale, et les images de sortie sont des images de RM, sur lesquelles les structures séparées spatialement se trouvant dans les zones excitées sont représentées de manière séparée spatialement dans l'au moins une direction spatiale.

4. Système selon l'une quelconque des revendications 2 et 3, **caractérisé en ce que** les images d'entrée sont des images de RM, qui ont été produites au moyen de plusieurs bobines réceptrices.

5. Système selon la revendication 4, **caractérisé en ce que**, pour chaque bobine réceptrice, au moins une image de RM est fournie en tant qu'image d'entrée, qui a été produite par excitation de plusieurs zones à enregistrer d'un objet, dans lequel des structures se trouvant dans les zones sont représentées de manière spatialement superposée au moins dans une direction spatiale.

6. Système selon la revendication 5, **caractérisé en ce que** l'unité de fourniture d'images d'entrée (4, 6) est adaptée pour fournir plusieurs jeux d'images d'entrée, dans lequel des images d'entrée d'un même jeu ont été produites par excitation des mêmes zones et en utilisant plusieurs bobines réceptrices, dans lequel des images d'entrée de jeux différents ont été produites par excitation de différentes zones, dans lequel le réseau neuronal est adapté pour produire, pour chaque jeu d'images d'entrée, un jeu d'images de sortie, sur lesquelles les zones excitées sont représentées de manière séparée spatialement, dans lequel l'unité de production d'images est adaptée pour enregistrer les unes avec les autres les images de sortie de différents jeux.

7. Système selon l'une quelconque des revendications précédentes, **caractérisé en ce que** l'unité de fourniture de réseau neuronal (7) est adaptée pour fournir un réseau d'apprentissage en profondeur en tant que réseau neuronal.

8. Système selon l'une quelconque des revendications précédentes, **caractérisé en ce que** le système (1) présente de plus :
- une unité de fourniture d'images d'entrée d'entraînement (9) pour fournir des images d'entrée d'entraînement, sur lesquelles des structures séparées dans les faits spatialement sont représentées de manière superposée spatialement au moins dans une direction spatiale,
- une unité de fourniture d'images de sortie d'entraînement (4, 6) pour fournir des images de sortie d'entraînement, sur lesquelles les structures séparées dans les faits spatialement sont représentées de manière séparée spatialement dans l'au moins une direction spatiale, et
- une unité d'entraînement de réseau neuronal (10) pour entraîner le réseau neuronal de telle manière que, lors de la saisie des images d'entrée d'entraînement dans le réseau neuronal, les images de sortie d'entraînement sont envoyées.

9. Système selon la revendication 8, **caractérisé en ce que** l'unité de fourniture d'images de sortie d'entraînement (4, 6) est adaptée pour fournir, en tant qu'images de sortie d'entraînement, des images de RM de diverses zones excitées séparément les unes des autres d'un objet de sorte que des structures se trouvant dans des zones différentes sont représentées de manière superposée dans aucune direction spatiale sur les images de sortie d'entraînement, dans lequel l'unité de fourniture d'images d'entrée d'entraînement (9) est adaptée pour fournir des images d'entrée d'entraînement, sur lesquelles les structures se trouvant dans les différentes zones sont représentées de manière superposée spatialement au moins dans une direction spatiale.

10. Système selon la revendication 9, **caractérisé en ce qu'**au moins une partie des images d'entrée d'entraînement a été produite par des mesures de RM.

11. Système selon l'une quelconque des revendications 9 et 10, **caractérisé en ce qu'**au moins une partie des images d'entrée d'entraînement a été produite par synthèse sur la base des images de sortie d'entraînement fournies.

12. Système selon l'une quelconque des revendications 8 à 11, **caractérisé en ce que** l'unité de fourniture d'images d'entrée d'entraînement (9) est adaptée pour fournir des images d'entrée d'entraînement avec des artéfacts d'image, et l'unité de fourniture d'images de sortie d'entraînement (4, 6) est adaptée pour fournir des images de sortie d'entraînement qui ne présentent pas les artéfacts d'image.

13. Procédé de production d'images, dans lequel le procédé présente :
- la fourniture d'images d'entrée, sur lesquelles des structures séparées dans les faits spatialement sont représentées de manière spatialement superposée au moins dans une direction spatiale ;
- la fourniture d'un réseau neuronal qui est adapté pour produire sur la base d'images d'entrée, sur lesquelles des structures séparées dans les faits spatialement sont représentées de manière superposée spatialement au moins dans une direction spatiale, des images de sortie, sur lesquelles les structures séparées dans les faits spatialement sont représentées de manière séparée spatialement dans l'au moins une direction spatiale,
- la production d'images sur la base des images d'entrée fournies et du réseau neuronal fourni.

14. Programme informatique pour produire des images, dans lequel le programme informatique est adapté pour mettre en œuvre le procédé de production d'images selon la revendication 13 quand il est exécuté sur un système (1) de production d'images selon la revendication 1.
